# EUROPEAN PATENT SPECIFICATION

(11) **EP 1 245 815 B1**
(45) Date of publication and mention of the grant of the patent: **07.06.2006**
(21) Application number: 02006931.6
(22) Date of filing: 26.03.2002
(51) Int. Cl.: F02D 41/40, F02D 37/02, F02D 43/00

(54) **Direct-injection spark-ignition engine with a turbo-charging device, engine control method , and computer-readable storage medium therefor**
Direkteinspritz- und Funkengezündeter Motor mit einer Turboaufladevorrichtung, Steuermethode und rechnerlesbares Speichermedium dafür
Moteur turbocompressé à allumage par étincelle et injection directe , méthode de commande, support de stockage lisible par ordinateur à cette fin.

(30) Priority: 30.03.2001 JP 2001100575; 30.03.2001 JP 2001100574
(43) Date of publication of application: 02.10.2002
(73) Proprietor: Mazda Motor Corporation, Aki-gun, Hiroshima 735-8670 (JP)
(72) Inventor: Uchida, Hiroyasu, Aki-gun, Hiroshima 735-8670 (JP); Umezono, Kazuaki, Aki-gun, Hiroshima 735-8670 (JP); Fujii, Mikihito, Aki-gun, Hiroshima 735-8670 (JP)
(74) Representative: Müller-Boré & Partner Patentanwälte

(56) References cited:
- EP-A- 1 004 762
- EP-A- 1 180 584
- WO-A-02/18764
- US-A- 5 207 058
- US-A- 5 642 705

## Description

The present invention relates to a direct-injection spark-ignition engine with a turbo-charging device, to an engine control method for a direct-injection spark-ignition engine with a turbo-charging device, to a computer-readable storage medium storing thereon a computer program and to a computer program for performing an engine control method, when run on a suitable computer.

Recently, an automotive spark-ignition engine is required highly to improve its fuel efficiency, from the environmental standpoints such as energy saving, and reduction in CO₂ (carbon-dioxide) emission. Under the requirement, a direct-injection spark-ignition engine has been prevailed rapidly, in which fuel is directly injected into combustion chambers to collect (to be stratified) in the vicinity of a spark plug for enhancing ignitionability, while causing air-fuel ratio to be lean of stoichiometric air-fuel ratio for improving fuel efficiency.

An engine with a turbo-charging device has been also known, which attains the increase in engine output by means of high intake-pressure, or high charging-efficiency caused by the efficient use of the high exhaust-gas pressure in the automotive engine. Such an engine with a turbo-charging device has been noticed for recent years for its effectiveness in providing leaner air-fuel ratio.

Meanwhile, normally, a catalyst converter adopting an exhaust-gas purification catalyst is disposed on an exhaust-gas passage of an engine. The catalyst purifies pollutants such as NOx (nitrogen-oxides), HC (hydrocarbon), and CO (carbonmonoxide) included in the exhaust gas emitted from the combustion chambers of the engine of the automobile. The exhaust-gas purification catalyst generally has a characteristic of sufficient purification for the exhaust-gas under higher temperature than its activation temperature and insufficient purification for the exhaust-gas under lower temperature than the activation temperature.

Accordingly, when the engine starts in a cold state, the exhaust-gas purification catalyst is not activated during a certain period after the engine starts. For reducing pollutants immediately after cold start, the exhaust-gas purification catalyst is required to rise its temperature rapidly to attain early activation.

In an engine with a turbo-charging device, however, a turbine of the turbo-charging device is disposed on the exhaust-gas passage, and the catalyst converter is disposed on the downstream side of the turbine. Therefore, in this arrangement, there is a problem that the temperature rise, or the activation of the exhaust-gas purification catalyst is delayed in cold-start because the turbine cools the exhaust gas (to 100 °C, for example). To avoid the problem, the catalyst converter may be arranged on the upstream side of the turbo-charging device. In this case, however, the catalyst converter is located at immediately downstream of the combustion chambers, so that the exhaust-gas purification catalyst is unduly heated when the engine is fully heated, causing a problem of the degradation in its durability due to the heat. In addition, the flow resistance due to the catalyst converter on the upstream side of the turbine inevitably causes turbo lag, which impairs the acceleration response in the turbo-charging device.

In view of the problems above, some approaches have been made. One of them is a supercharged engine, which lowers its turbine rotational speed in cold start to suppress heat transmission from the exhaust gas to the turbine for promoting temperature rise or activation of the exhaust-gas purification catalyst (disclosed in Japanese patent publication No. H9-100724).

The other is a direct-injection spark-ignition engine in which fuel injection is divided in two, or fuel is injected in the intake stroke and the compression stroke in cold start, to increase the temperature of the exhaust gas for promoting temperature rise or activation of the exhaust-gas purification catalyst (disclosed in Japanese patent publica-Another direct-injection spark-ignition engine has been also proposed, in which fuel is injected in the intake stroke and in the compression stroke during a predetermined period after cold start, then fuel is injected in the compression stroke and in the expansion stroke after the period, to increase the temperature of the exhaust gas for promoting temperature rise or activation of the exhaust-gas purification catalyst (disclosed in Japanese patent publication No. 2000-120471).

In the meantime, emission standards for automotive engines have been stricter recently, which require the engines to activate their exhaust-gas purification catalysts within approximately 30 seconds after cold start, for example. However, the conventional approaches to promoting activation of the exhaust-gas purification catalyst in cold start, as disclosed in Japanese patent publication No. H9-100724, H10-212987, or 2000-120471 described above, may be insufficient for promoting the temperature rise or activation of the exhaust-gas purification catalyst under so strict emission standards, accordingly, the auto industry seeks more effective approaches to promoting activation of the exhaust-gas purification catalyst.

EP 1 004 762 A, which discloses the features of the preambles of the independent claims, discloses a method for controlling the injection and ignition in a direct-injection engine such that the heating of a catalytic converter disposed in an exhaust pipe may be accelerated. This method performs a first injection of fuel during a suction stroke and/or a compression stroke of the engine and a second injection during the exhaust stroke. The second injection is to rise the temperature of the exhaust gas flowing into the catalyst by buming the fuel injected during the exhaust stroke together with the oxygen remaining in the exhaust gas which is ejected from the combustion chamber. The total air/fuel ratio of the exhaust gas is set close the stoichiometric value.

In view of the problems above, the object of the present invention is to provide an approach to sufficiently promoting the temperature rise or activation of the exhaust-gas purification catalyst which is disposed on the downstream side of the turbine on the exhaust-gas passage in the direct-injection spark-ignition engine with the turbo-charging device in cold start.

This object is solved according to the invention by a a direct-injection spark-ignition engine according to claim 1, by an engine control method according to claim 15, by a computer-readable storage medium storing thereon a computer program according to claim 16 and by computer program according to claim 17. Preferred embodiments of the invention are subject of the dependent claims.

According to the present invention, the object is achieved by a direct-injection spark-ignition engine with a turbo-charging device, comprising a fuel injector for directly injecting fuel into a combustion chamber, an ignition device for igniting the injected fuel, an exhaust-gas purification catalyst, a fuel injection controller for controlling the amount and the timing of the fuel injection by the fuel injector, an ignition controller for controlling the ignition timing by the ignition device, and an intake-air controller for controlling the amount of intake-air introduced in the combustion chamber,
wherein the fuel injection controller causes the fuel injector to perform divided injection of a leading fuel injection in a leading period prior to the ignition timing including the intake stroke, and a trailing fuel injection in a trailing period of the expansion stroke after the ignition timing, during a predetermined operating condition where the exhaust-gas purification catalyst is to be activated, characterized in that
the engine further comprises a turbo charging device including a turbine,
said exhaust gas purification catalyst is disposed at the downstream of said turbine of the turbo charging device in an exhaust-gas passage, and
the fuel injection controller controls the fuel injector and the intake-air controller controls the amount of intake-air so that the excess air ratio λ in the combustion chamber is larger than 1 when the combustion of the fuel by the trailing fuel injection and the leading fuel injection completes, so that the turbine agitating the exhaust gas generates an afterburn causing a temperature rise of the exhaust gas being discharged to the exhaust-gas purification catalyst disposed at the downstream side of said turbine.

Preferably, at low engine rotational speed and low engine load, the fuel injection controller controls the fuel injector and the intake-air controller may control the amount of intake-air so that the excess air ratio λ in the combustion chamber is within the range from 2 to 3 when the fuel by the leading fuel injection combusts.

Accordingly, the fuel injected by the leading fuel injection combusts under high volumetric efficiency (ηv) with a leaner air-fuel ratio of λ of 2 to 3 (this condition is referred to as "a leading combustion"). Additionally, the fuel by the trailing fuel injection effectively combusts because of a leaner air-fuel ratio (exhaust-gas air-fuel ratio) of λ smaller than 1 at the combustion (this combustion is referred to as "a trailing combustion"). At this time, the trailing combustion raises the exhaust-gas temperature. Moreover, the turbine of the turbo-charging device agitates the exhaust-gas (this agitation is referred to as "turbine agitation"). The turbine agitation causes unburned HC in the exhaust-gas to oxidize (afterburn), and this exotherm further raises the exhaust-gas temperature. In this manner, exhaust-gas temperature is raised with heat by the trailing combustion and by the oxidization of the unburned HC by the turbine agitation to greatly raise the exhaust-gas temperature, for effectively promoting the temperature rise or activation of the exhaust-gas purification catalyst in the downstream of the turbine.

Preferably, the predetermined operating condition may be where the exhaust-gas purification catalyst is in an inactivated state, in the early stage of the inactivated state, the ignition controller may cause the ignition device to ignite at a timing after MBT (minimum advance for best torque) by a predetermined period and the fuel injection controller may cause the fuel injector to inject fuel prior to the ignition timing, in the late stage of the inactivated state, the fuel injection controller may cause the fuel injector to perform divided injection of a leading fuel injection in a leading period prior to the ignition timing including the intake stroke, and a trailing fuel injection in a trailing period of the expansion stroke after the ignition timing, and the fuel injection controller may control the fuel injector and the intake-air controller controls the amount of intake-air so that an exhaust-gas air-fuel ratio after the combustion of the fuel by the trailing fuel injection is lean of the stoichiometric air-fuel ratio.

Accordingly, in the early stage of a condition where the exhaust-gas purification catalyst is in an inactivated state, or when engine temperature is relatively low, because the ignition timing is retarded to the timing after MBT, the exhaust-gas temperature rises to promote warm-up of the engine and temperature rise in the exhaust-gas purification catalyst. Under this condition, the temperature rise in exhaust-gas by the fuel injection in the expansion stroke after the ignition timing (without ignition retard) is less than that by ignition retard. This is because relatively low temperature in the engine or the exhaust-gas in this condition causes poor combustionability of the fuel injected in the expansion stroke, and the agitation of the exhaust-gas by the turbine (referred to as turbine agitation) described later causes little oxidization of the unburned HC (afterburn).

On the other hand, in the late stage of a condition where the exhaust-gas purification catalyst is in an inactivated state, relatively high engine temperature or the exhaust gas and lean air-fuel ratio (with the sufficient amount of oxygen) maintain combustionability of the fuel by the trailing fuel injection (avoid misfire), so that such a combustion raises the temperature of the exhaust-gas and the turbine agitation promotes oxidization of the unburned HC to further raises the exhaust-gas temperature. Under this condition, the temperature rise in exhaust-gas by ignition retard (without fuel injection in the expansion stroke) is less than that by the trailing fuel injection. In this manner, in cold start, the most effective approach to promoting the temperature rise in the exhaust-gas is selected, so that the exhaust-gas purification catalyst can be heated or activated early.

According to the invention,there is further provided an engine control method for a direct-injection spark-ignition engine with turbo charging device and exhaust-gas purification catalyst disposed at the downstream of the turbine of the turbo charging device, in particular according to the invention or an embodiment thereof, comprising the following steps:
performing divided injection of a leading fuel injection in a leading period prior to the ignition timing including the intake stroke, and a trailing fuel injection in a trailing period of the expansion stroke after the ignition timing, during a predetermined operating condition where the exhaust-gas purification catalyst is to be activated characterized by
agitating the exhaust gas upstream of the exhaust gas purification catalyst, as it passes through the turbine of the turbo charging device
and controlling an amount of intake-air so that the excess air ratio λ in a combustion chamber is larger than 1 when the combustion of the fuel by the trailing fuel injection and the leading fuel injection completes, so as to generate an afterburn.

According to the invention, there is further provided a computer-readable storage medium having stored thereon a computer program, which, when loaded onto a computer, carries out an engine control method for a direct-injection spark-ignition engine according to the invention or an embodiment thereof.

According to the invention, there is further provided a computer program or computer program product, which, when loaded onto a computer, carries out an engine control method for a direct-injection spark-ignition engine according to the invention or an embodiment thereof.

These and other objects, features, aspects, and advantages of the present invention will become more apparent from the following detailed description of the preferred embodiment relative to the accompanied drawings, in which:
FIG. 1 is a schematic diagram showing the construction of a direct-injection spark-ignition engine with a turbo-charging device according to the present invention.
FIG. 2 (a) is a graph chart showing the change in the exhaust-gas temperature with the leading air-fuel ratio and the total air-fuel ratio.
FIG. 2 (b) a graph chart showing the change in the amount of the HC emission with the leading air-fuel ratio and the total air-fuel ratio.
FIG. 3 (a) is a graph chart showing the change in the exhaust-gas temperature with the trailing fuel injection timing.
FIG. 3 (b) is a graph chart showing the change in the HC concentration with the trailing fuel injection timing.
FIG. 3 (c) is a graph chart showing the change in the amount of smoke, with the trailing fuel injection timing.
FIG. 4 (a) is a graph chart showing the change in the exhaust-gas temperature with the ignition timing.
FIG. 4 (b) is a graph chart showing the change in the HC concentration with the ignition timing.
FIG. 4 (c) is a graph chart showing the change in the amount of smoke with the ignition timing.
FIG. 5 (a) is a time chart for explaining the fuel injection timing in cold start.
FIG. 5 (b) a graph chart showing in the change in the heat generation according to the fuel injection timing shown in FIG. 5 (a).
FIG. 6 (a) is a graph chart showing the change in the exhaust-gas temperature and the HC emission with the trailing fuel injection timing.
FIG. 6 (b) is a graph chart showing the change in the exhaust-gas temperature in the outlet of the engine with the leading air-fuel ratio and with the total air-fuel ratio.
FIG. 7 (a) is a graph chart showing the change in the HC emission with the total air-fuel ratio with the turbine agitation and without the turbine agitation.
FIG. 7 (b) is a graph chart showing the change in the exhaust-gas temperature with the total air-fuel ratio with the turbine agitation and without the turbine agitation.
FIG. 8 (a) is a graph chart comparing the exhaust-gas temperature with the turbine agitation to that without the turbine agitation in the upstream of the turbine and in the downstream of the turbine.
FIG. 8 (b) is a graph chart showing the relation between the exhaust-gas temperature and the fuel consumption rate for the trailing fuel injection and for the ignition retard.
FIG. 9 is a graph chart comparing the exhaust-gas temperatures in the inlet of the catalyst converters for the engine with turbo-charging device according to the present invention, the conventional engine with the turbo-charging device, and the conventional non-supercharged engine.
FIG. 10 (a) is a graph chart showing the change with time in the engine rotational speed.
FIG. 10 (b) is a graph chart showing the change with time in the exhaust-gas temperature in the upstream of the turbine.
FIG. 10 (c) is a graph chart showing the change with time in the exhaust-gas temperature in the downstream of the turbine.

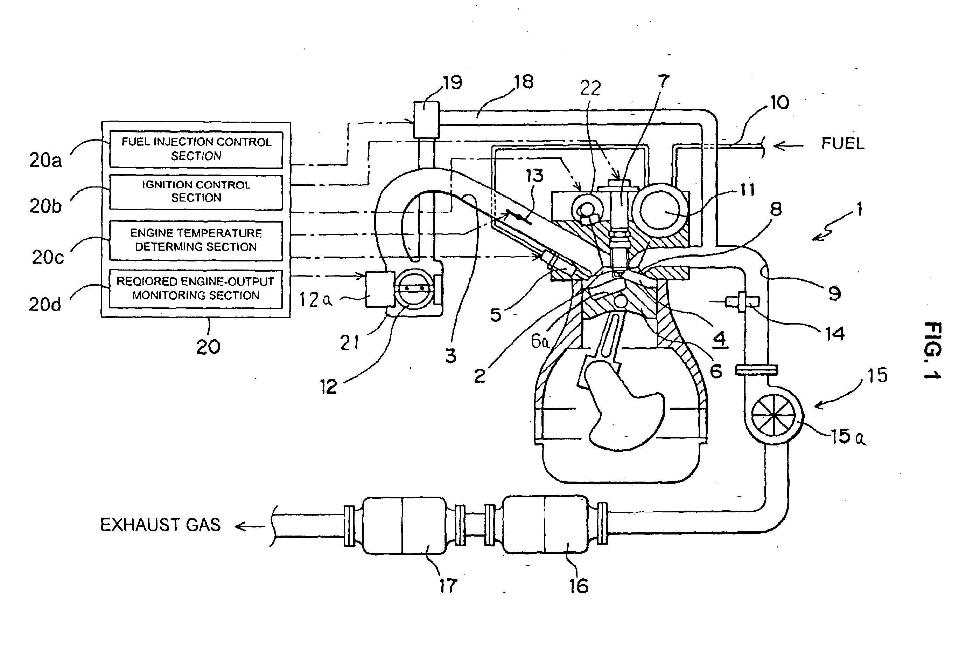

A preferred embodiment of the present invention will be described in detail. FIG. 1 shows a direct-injection spark-ignition engine with a turbo-charging device 1 according to the preferred embodiment (referred to as "engine 1"). Air is introduced into a combustion chamber 4 through an intake-air passage 3 when an intake valve 2 is open, before combusting. Then, fuel injector 5 (fuel injection device) injects fuel (gasoline) into the air in the combustion chamber 4 at the predetermined timing to form a mixture.

The mixture is compressed by a piston 6, then is ignited by a spark plug 7 (a spark ignition device) to combust. The combusted gas or exhaust gas is discharged into an exhaust-gas passage 9 while an exhaust valve 8 is open.

The fuel injector 5 is supplied with fuel from a high-pressure fuel pump 11 via a fuel supply passage 10. By means of the high-pressure fuel pump 11, fuel is properly injected against high pressure in the combustion chamber 4 in late-stage of the compression stroke. The fuel injector 5, preferably being a swirl-type injector, is so disposed that its fuel injection opening directly fronts into the combustion chamber 4. Additionally, the fuel injector 5 is so disposed as to inject fuel into a cavity 6a formed on the top of a piston 6 when the piston 6 reaches near the top-dead-center. Accordingly, fuel injected by the fuel injector 5 in late-stage of the compression stroke bounces off the cavity 6a to collect (to be stratified) in the vicinity of the spark plug 7. Alternatively, the stratification of the injected fuel in the vicinity of the spark plug 7 may be caused by an airflow in the combustion chamber 4, for example. In this way, fuel or mixture is stratified for high ignitionability, so that the air-fuel ratio is caused to be so greatly leaner as to improve fuel efficiency.

In the intake-air passage 3, from the upstream side along the airflow (flow of the intake air), an electric-controllec throttle valve 12 for regulating the airflow, a surge tank 21 for evening out the airflow, and a gas-flow control valve 13 for adjusting the airflow direction towards the combustion chamber 4 to produce swirl, are disposed in order. The electric-controlled throttle valve 12 is driven by an electric actuator 12a acting on control signals from a control unit 20 (ECU), to regulate airflow into the combustion chamber 4. Not shown in the drawing, on the upstream side of the electric-controlled throttle valve 12 in the intake-air passage 3, an air cleaner for eliminating dusts or particles from the air (not shown), an airflow sensor for sensing the amount of the airflow, a blower (pump) of a turbo charger 15 described later, and an intercooler for cooling the air heated by the blower compression, are disposed, from the upstream side in order.

In the exhaust-gas passage 9, from the upstream side along the exhaust airflow, a linear O₂ sensor 14 for sensing the air-fuel ratio through oxygen concentration in the exhaust gas (or a conventional λO₂ sensor, the output of which is reversed near λ = 1, may be used), a turbine 15a of the turbo charger 15, a first catalyst converter 16, a second catalyst converter 17, are disposed in this order. Not shown in detail, the first catalyst converter 16 preferably is of two-bed type. Its upstream bed is loaded with a three-way catalyst which purifies the pollutants such as NOx, HC, and CO, and its downstream bed is loaded with a NOx purification catalyst which mainly purifies NOx. The first catalyst converter 16 may be of one-bed type which is loaded only with a three-way catalyst. On the other hand, the second catalyst converter 17 preferably is of one-bed type, which is loaded with a NOx purification catalyst which mainly purifies NOx. It should be appreciated that either exhaust-gas purification catalyst 16, 17 provides sufficient purification under higher temperature than its activation temperature, and provides insufficient purification under lower temperature than the activation temperature.

The engine 1 is equipped with an exhaust gas recirculation (EGR) passage 18 for performing exhaust gas recirculation (EGR), or for partly returning the exhaust gas in the exhaust-gas passage 9 to the intake-air passage 3. In the EGR passage 18, an EGR regulating valve 19 for regulating the amount of the EGR gas is disposed. The intake valve 2 is variable in its operational timing preferably via a variable valve-timing mechanism 22.

The control unit 20 is a control device for the overall control of the engine 1, and executes a variety of engine controls based on a variety of control data. The control data include the amount of intake air, throttle opening, crank angle, coolant temperature (engine temperature), air-fuel ratio, etc., which are inputted into the control unit 20. Then, the control unit 20 uses the control data to execute the controls of the amount of the fuel injection (air-fuel ratio control) and the timing of the fuel injection by the fuel injector 5, the timing of the ignition by the spark plug 7 (ignition timing control), the opening of the electric-controlled throttle valve 12, the opening of the EGR regulating valve 19, the opening of the gas-flow control valve 13, and/or the operational timing of the intake valve 2, etc. That is, the control unit 20 includes a fuel injection control section or unit 20a for controlling the amount and the timing of the fuel injection by the fuel injector 5, an ignition control section or unit 20b for controlling the ignition timing by the spark plug 7. The control unit 20 further includes a required engine-output monitoring section or unit 20c for monitoring the required engine output, and an engine temperature determining section or unit 20d for determining the engine temperature.

The following description is for only the fuel injection amount control (air-fuel ratio control), the fuel-injection timing control, and the ignition timing control in cold start (during the catalyst activation) of the engine 1 which are significant for the preferred embodiment of the present invention. The other controls of the engine 1 by the control unit 20 are not described, because they are well-known conventional controls and not significant for the present invention. The term "cold start" used in this specification refers to when the engine 1 starts in an unheated state at normal temperature, including a cold state.

In the engine control described above, the fuel injection by the fuel injector 5 is divided into leading fuel injection performed in the latter half of the compression stroke prior to the ignition timing, and trailing fuel injection performed in the earlier half of the expansion stroke after the ignition timing in engine cold start (during the catalyst activation). The leading fuel injection may be performed in the intake stroke or in the earlier half of the compression stroke. In this condition, the amount of the fuel by the leading fuel injection is so set as to be equal to or more than that by the trailing fuel injection. Accordingly, the combustion of the fuel by the leading fuel injection (referred to as leading combustion) and the combustion of the fuel by the trailing fuel injection (referred to as trailing combustion) effectively raise the exhaust-gas temperature, and prevent the extra emission of unburned HC in the trailing combustion.

In this condition, the starting timing of the trailing fuel injection is set within the range from after top dead center (ATDC) 30 to 90° cranck angle (CA). This causes the leading combustion and the trailing combustion to raise the exhaust-gas temperature more effectively, and to prevent the extra emission of unburned HC in the trailing combustion more effectively. Additionally, the ignition by the spark plug 7 is set to the timing prior to the top dead center in the compression stroke. This prevents the degradation of the fuel efficiency, while effectively promoting the temperature rise or the activation of the exhaust-gas purification catalyst in both the catalyst converters 16, 17.

The settings of the air-fuel ratio and the excess air ratio will now be described. The air-fuel ratio in the combustion chamber 4 at the combustion of the fuel by the leading fuel injection (referred to as a leading air-fuel ratio) is preferably set within the range of 2 <=λ<= 3. More particularly, the amount of fuel by the leading fuel injection is set for a required engine output, on the other hand, the amount of air (or intake air) is controlled (or increased) in the intake-air passage 3 leading to the inlet of the combustion chamber 4 so that the excess air ratio λ is preferable value within the range of 2 <=λ<= 3. This air amount control (or increase) is caused via a boost pressure control in the turbo-charging device 15. Alternatively, the amount of air may be controlled via opening period control or open/close timing control of the intake valve 2 by the variable valve-timing mechanism 22 with the electric-controlled throttle valve 12 being fully opened (or without the throttle valve 12). More preferably, excess air ratio λ for the leading air-fuel ratio may be set within the range of 2.3 <=λ<= 2.7. This effectively increases volumetric efficiency (i.e. the ratio of air or air/fuel mixture drawn into the combustion chamber 4 of the engine 1 to the volumetric displacement of the piston 6) or intake-air charging efficiency ηv.
The air-fuel ratio in the combustion chamber 4 at the combustion of the fuel by the trailing fuel injection (referred to as "a total air-fuel ratio" or "an exhaust-gas air-fuel ratio") is preferably set within the range of 1 <λ< 2. (That is, the amount of air and the amount of fuel injection are controlled.) More preferably, the total air-fuel ratio is so set that the excess air ratio λ is within the range of 1.0 <λ< 1.3, still further preferably, 1.1 <λ< 1.2. This ensures the temperature rise in the exhaust-gas by the trailing combustion to promote the oxidization of unburned HC (afterburn) by the turbine agitation.

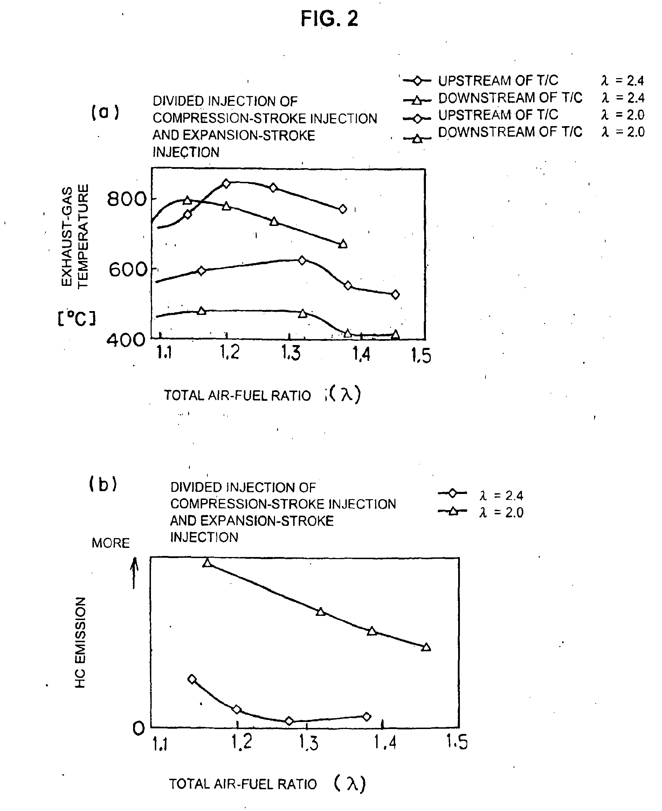

FIG. 2 (a) and (b) show the change in the exhaust-gas temperature and the HC emission with the leading air-fuel ratio and the total air-fuel ratio by way of example. As apparent from FIG. 2 (a) and (b), λ of 2.4 causes higher exhaust-gas temperature in the downstream of the turbine than λ of 2.0 for the leading air-fuel ratio (as with exhaust-gas temperature in the upstream of the turbine). Accordingly, for the leading air-fuel ratio, λ is preferably set within the range of 2.3 <=λ<= 2.7 as described above, that is an expanded range from λ of 2.4 with an upper margin and a lower margin smaller than the upper margin (with an upper margin of 0.3 and a lower margin of 0.1). For the total air-fuel ratio, the highest exhaust-gas temperature is attained with the range of 1.1 <λ< 1.3, specifically, with 1.1 <λ< 1.2. Accordingly, for the total air-fuel ratio, λ is preferably set within the range of 1.0 <λ< 1.3 added with a margin on a richer side as described above, more preferably, 1.1 <λ< 1.2.

In this manner, the trailing fuel injection in the expansion stroke after ignition in cold start (during the catalyst activation) raises the exhaust-gas temperature as a result of the combustion of the injected fuel. Then, part of the fuel does not burn and remains in the exhaust gas in the form of unburned HC. The exhaust gas including the unburned HC, however, is agitated by the turbine 15a of the turbo charger 15 while passing through the turbine (turbine agitation). The turbine agitation causes the unburned HC to oxidize with oxygen in the exhaust gas (afterburn). The oxidization of the unburned HC generates heat to further raise the exhaust-gas temperature. In this way, the temperature rise of the exhaust-gas promotes the temperature rise or activation of the exhaust-gas purification catalyst in both the catalyst converters 16 and 17.

In this case, the sufficient amount of oxygen is required for effectively burning the fuel by the trailing injection, and for effectively oxidizing the unburned HC with the turbine agitation. Therefore, to ensure the required amount of oxygen for the burn and/or the oxidization above, lean air-fuel ratio is provided in cold start (of course, the leading air-fuel ratio is leaner than this). It should be noted that such an air-fuel control, where the air-fuel ratio is set to be lean of the stoichiometric air-fuel ratio in cold start, is completely novel over conventional air-fuel ratio controls.

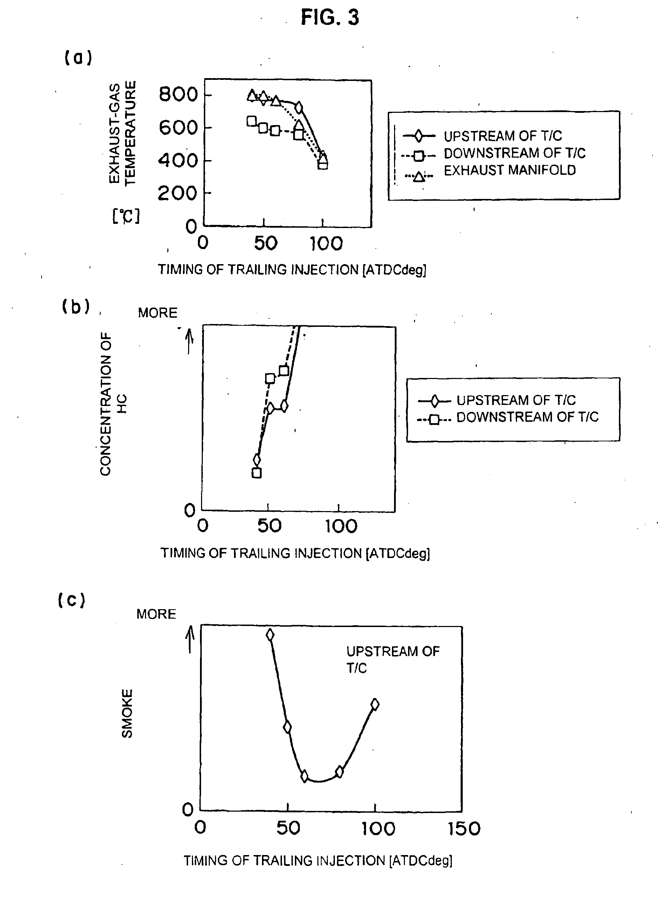

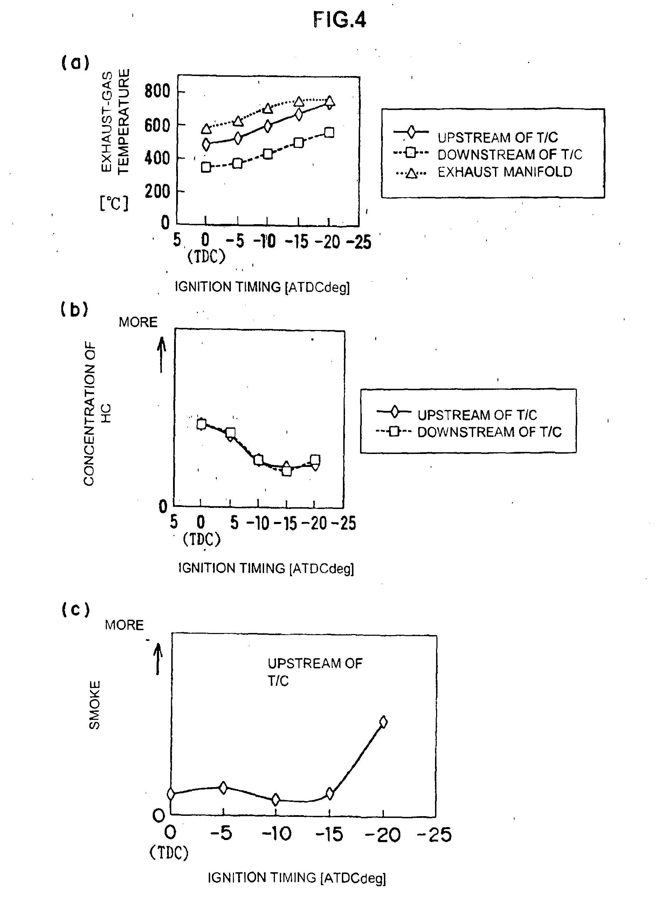

The features and advantages of the fuel injection control and the ignition timing control in cold start described above will be described in detail based on the empirical data. FIG. 3 (a), (b), and (c) show the change in the exhaust-gas temperature, HC concentration, and the amount of smoke with the injection timing of the trailing fuel injection (referred to as trailing injection timing) for the condition where the leading fuel injection and the trailing fuel injection are performed without the ignition retard (referred to as "activation by supercharging and expansion-stroke injection"), respectively. FIG. 4 (a), (b), and (c) show the change in the exhaust-gas temperature, HC concentration, and the amount of smoke with the ignition timing for the condition
where the conventional divided injections, or the intake-stroke injection and the compression-stroke injection are performed with the ignition retarded to a timing after minimum advance for best torque, MBT (referred to as "activation by supercharging and ignition retard"), respectively.

As will be apparent from FIG. 3 (a), (b), and (c), the trailing injection timing of approximately 40 to 80 ATDC. deg keeps high exhaust-gas temperature in the downstream of the turbine 15a. That is, the trailing injection timing is preferably set within the range approximately from 30 to 90 ATDC. deg (ATDC 30 to 90°CA) in cold start, which is added slight margins as described above. More preferably, the trailing injection timing may be set within the range approximately from 50 to 60 ATDC. deg in cold start, for the trailing injection timing later than 60 ATDC. deg abruptly increases the HC concentration, and the trailing injection timing earlier than 50 ATDC. deg abruptly increases the amount of smoke.

As will be apparent from FIG. 4 (a), (b), and (c), the ignition timing ranging approximately from 10 to 20 ATDC. deg (that is, -10 to -20 deg advanced) keeps high exhaust-gas temperature in the downstream of the turbine. That is, the ignition timing set within the range approximately from 10 to 20 ATDC. deg further raises the exhaust-gas temperature in cold start, though the fuel efficiency is degraded by a little amount then. More preferably, the ignition timing is set within the range approximately from 10 to 15 ATDC. deg in the early-stage of catalyst activation, for the ignition timing later than 15 ATDC. deg abruptly increases the amount of smoke.

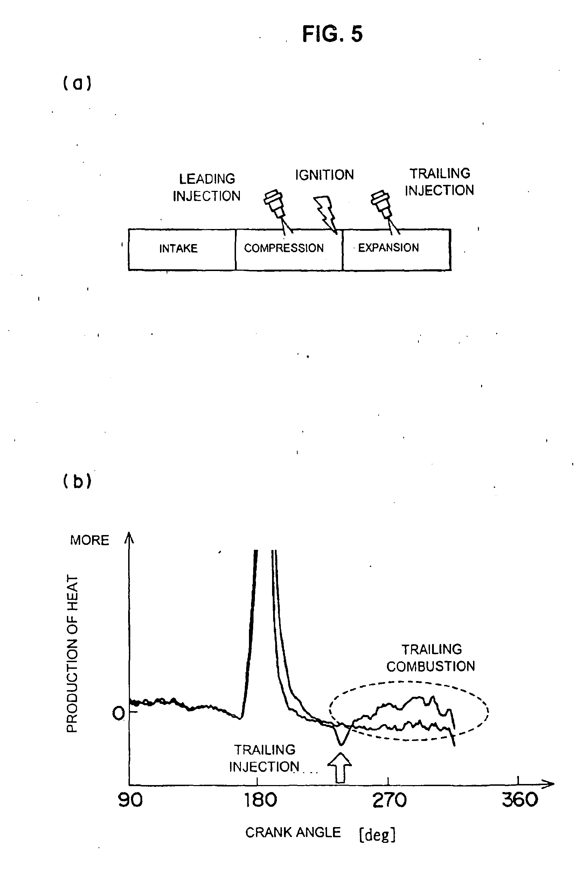

The effect of the increase in the exhaust-gas temperature by the expansion-stroke injection and the effect of the increase in the exhaust-gas temperature by the turbine agitation will be described in detail based on the empirical data. With the leading fuel injection in the compression stroke prior to the ignition and the trailing fuel injection in the expansion stroke after the ignition in the manner shown in FIG. 5 (a), fuel combustion generates heat approximately over 240 to 320 CA. deg (crank angle) as shown in FIG. 5 (b). Accordingly, it is proven that the fuel injected in the expansion stroke effectively burns. For reference, FIG. 5 (b) also depicts the temperature change in the case where the trailing fuel injection is not performed.

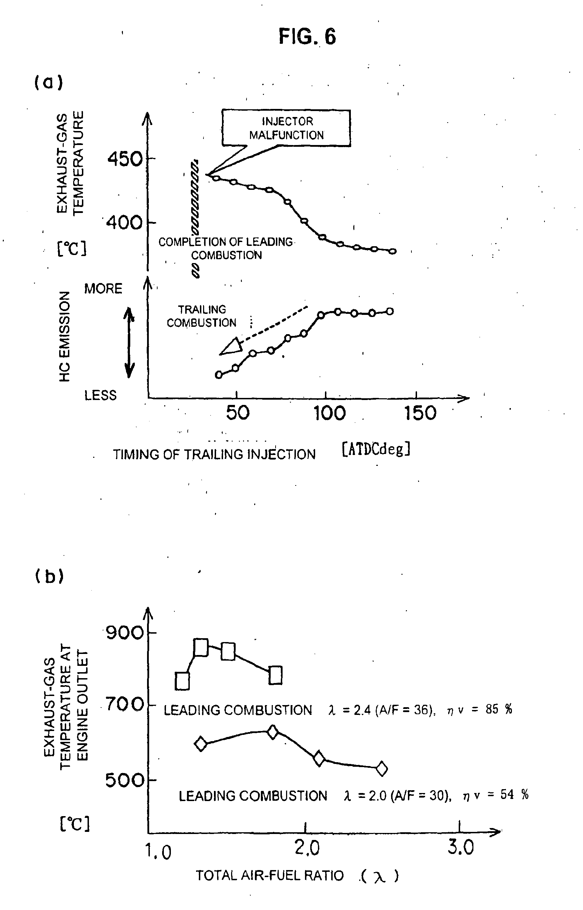

As shown in FIG. 6 (a), where the trailing fuel injection timing in the expansion stroke is later than 40 ATDC. deg, the exhaust temperature rises and the HC emission is reduced as the trailing fuel injection timing advances, or as it approaches to the top-dead-center of the expansion stroke with high in-cylinder gas-temperature. However, the trailing fuel injection prior to the combustion completion of the fuel by the leading injection (referred to as completion timing of the leading combustion), or during combustion of the fuel, produces the considerable amount of carbon to cause the malfunction in the fuel injector 5. Accordingly, the trailing-injection timing should be set to a timing after the completion timing of the leading combustion. In this example, the completion timing of the leading combustion is approximately 25 ATDC. deg.

FIG. 6 (b) shows the change in the exhaust-gas temperature at the outlet of the engine (in the upstream portion of the turbine in the exhaust passage) with the air-fuel ratio of the fuel by the leading injection in combustion (leading air-fuel ratio), and with the air-fuel ratio (A/F) of the fuel by the trailing injection in combustion (total air-fuel ratio). As will be apparent from FIG. 6 (b), the exhaust-gas temperature at the outlet of the engine depends on the leading air-fuel ratio and the total air-fuel ratio. Particularly, the exhaust-gas temperature at the outlet of the engine rises for the leaner leading air-fuel ratio (at least approximately up to the air-fuel ratio of 36). In addition, the exhaust-gas temperature at the outlet of the engine reaches the maximum value for a specified total air-fuel ratio depending on the leading air-fuel ratio, that is the temperature does not reach the maximum value for other than the specified air-fuel ratio. Accordingly, the total air-fuel ratio should be favorably set according to the leading air-fuel ratio so as to maximize the exhaust-gas temperature at the outlet of the engine:

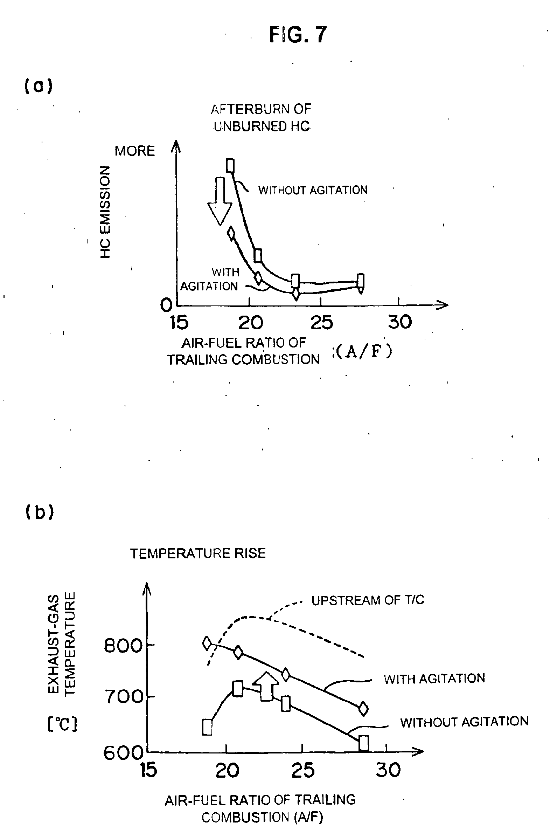

FIG. 7 (a) and (b) show the measurements of the amount of the HC emission and the exhaust-gas temperature in the downstream of the turbine, with and without the turbine agitation, respectively. As will be apparent from FIG. 7 (a) and (b), less HC emission and higher exhaust-gas temperature are attained with the turbine agitation than without the turbine agitation. This is because the turbine agitation causes the unburned HC in the exhaust gas to oxidize (afterburn).

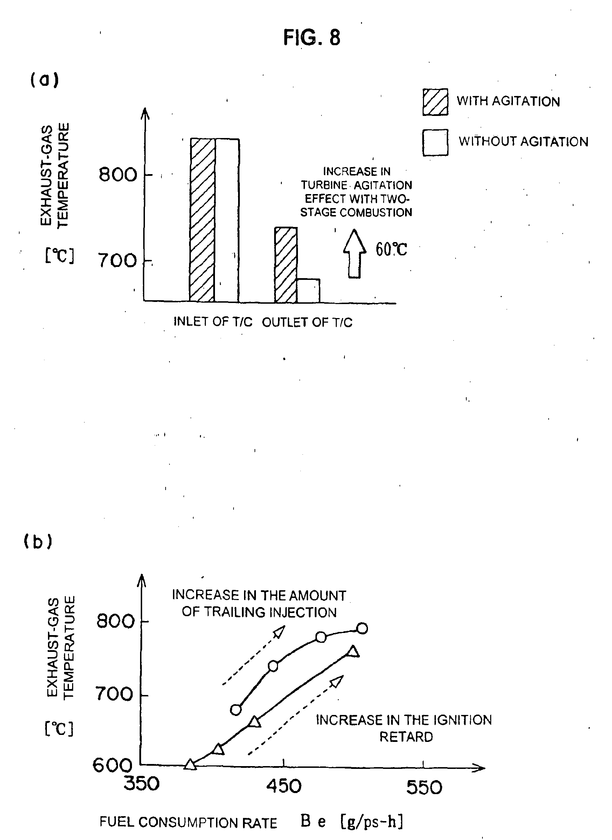

FIG. 8 (a) shows the exhaust-gas temperature in the upstream of the turbine and in the downstream of the turbine, with and without the turbine agitation, respectively. As will be apparent from FIG. 8 (a), in this example, the turbine agitation raises the exhaust-gas temperature by 60°C. FIG. 8 (b) shows the relation between the exhaust-gas temperature and the fuel consumption rate, for the trailing fuel injection and for the ignition retard, respectively. As will be apparent form FIG. 8 (b), for the same exhaust-gas temperature, the trailing fuel injection provides less fuel consumption rate (better in fuel economy) than the ignition retard. In addition, for the same fuel consumption rate, the trailing fuel injection provides higher exhaust temperature than the ignition retard. Accordingly, in cold start, the trailing fuel injection (expansion-stroke injection) advantageously raises the exhaust-gas temperature for promoting the temperature rise, or the activation of the exhaust-gas purification catalyst, rather than the ignition retard.

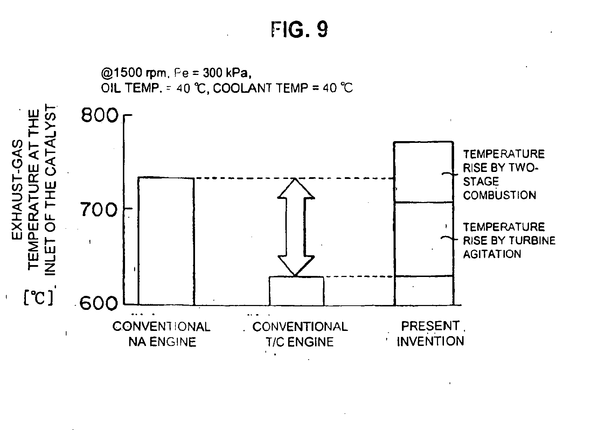

FIG. 9 shows the measurements of the exhaust-gas temperature at the inlet of the catalyst converter (exhaust-gas purification catalyst), for the engine with the turbo-charging device 1 according to the preferred embodiment, for a conventional engine with a turbo-charging device, and for a conventional non-supercharged engine, respectively by way of example. In the measurements, engine rotational speed is 1500 rpm, brake mean effective pressure is 300 kPa, lubrication-oil temperature is 40°C, and coolant temperature is 40°C, or a condition of low engine rotational speed and low engine load is simulated. As shown in FIG. 9, the engine with the turbo-charging device 1 according to the preferred embodiment attains the exhaust-gas temperature approximately 140°C higher than the conventional engine with the turbo-charging device, and approximately 30°C higher than the conventional non-supercharged engine. The conventional engine with the turbo-charging device attains the exhaust-gas temperature approximately 110°C lower than the conventional non-supercharged engine. That is, the engine 1 according to the preferred embodiment achieves sufficiently high exhaust-gas temperature in combination with the effect by the trailing fuel injection (two-stage combustion effect) and the effect by the turbine agitation (turbine agitation effect).
Depending on the specification of engine, however, the exhaust-gas temperature may not rise by a large amount because of less combustionability of the injected fuel and inactive oxidization of the unburned HC by the turbine agitation, in the case
where fuel is injected in the expansion stroke after ignition under low engine temperature, or low exhaust-gas temperature. Also the increase in the amount of HC emission overloads the three-way catalyst in the first catalyst converter 16. In such a case, different fuel injection control and air-fuel ratio control from the controls above during the early stage of catalyst activation advantageously achieve temperature rise in the exhaust-gas to promote the activation of the exhaust-gas purification catalyst. Such a control will now be described.

During the period from the cold start of the engine 1 to a predetermined timing of injection-mode shift (this period is defined as the early stage of catalyst activation), the fuel injector 5 injects fuel only prior to the ignition, while the spark plug 7 ignites at the timing after MBT by a predetermined period, or the ignition is retarded to a timing after MBT by the predetermined period. The timing of injection-mode shift is determined based on engine temperature or coolant temperature. Particularly, the timing of injection-mode shift is when fuel by trailing injection described later sufficiently ensures its combustionability and the engine temperature rises to cause unburned HC to oxidize by the turbine agitation.

In the early stage of catalyst activation, the exhaust-gas purification catalysts in both the catalyst converters 16 and 17 are not activated, and the engine temperature and the exhaust-gas temperature are relatively low. In this condition, fuel injection is divided in two. One of them is the intake-stroke injection performed in the intake stroke; the other is the compression-stroke injection performed in the latter half of the compression stroke. The total amount of the injected fuel of the intake-stroke injection and the compression-stroke injection are determined in the following manner. Firstly, the acceleration pedal stroke and the engine rotational speed are used to determine a target torque by the engine, with reference to a map or other criteria. Next, the target torque and the amount of the intake air are used to determine the total amount of the injected fuel, with reference to a map or other criteria. The exhaust-gas air-fuel ratio, or total air-fuel ratio is set to be equal to or rich of the approximately stoichiometric air-fuel ratio (λ= 1 or λ< 1). Here, λ represents the excess air ratio in the early stage of catalyst activation.

In the meantime, while the exhaust-gas purification catalysts in both the catalyst converters 16 and 17 are not activated after the injection mode is shifted (this period is defined as the late-stage of catalyst activation), the fuel amount control, the fuel-injection timing control, and the air-fuel ratio controls are performed in the above-mentioned manner. Then, the retard of the ignition timing is cancelled, or the ignition by the spark plug 7 is set to the timing prior to the top dead center in the compression stroke.

The reason for the above controls, by which the ignition timing is retarded without fuel injection in the expansion stroke after ignition in the early-stage of catalyst activation, while the retard of the ignition timing is cancelled, or is set to the timing prior to the top dead center in the compression stroke with fuel injection in the expansion stroke after ignition in the late-stage of catalyst activation, will be described.

By setting the air-fuel ratio to be approximately equal to or rich of stoichiometric air-fuel ratio, a reduction of an engine output (mechanical energy) caused by the retard of an ignition to a timing after MBT (minimum advance for best torque) can be compensated. In fact, the conversion rate of thermal energy produced by the fuel combustion into mechanical energy is reduced by the retard of an ignition to a timing after MBT, and the reduced amount of energy remains in the exhaust gas in the form of thermal energy. Accordingly, this raises the exhaust-gas temperature and the ignition is retarded to a timing after MBT in the early-stage of catalyst activation for promoting temperature rise of the engine or the exhaust gas. This temperature rise of the exhaust gas promotes the temperature rise or activation of the exhaust-gas purification catalyst in both the catalyst converters 16 and 17..

After transition from the early-stage to the late-stage of catalyst activation, the ignition retard is cancelled, or is set to the timing prior to the top dead center in the compression stroke, while the trailing fuel injection starts. Then, the ratio of the amount of the trailing fuel injection to the amount of the leading fuel injection is increased gradually (up to 20 %, for example), for abrupt increase in the amount of the trailing fuel injection increases the amount of the unburned HC emission.

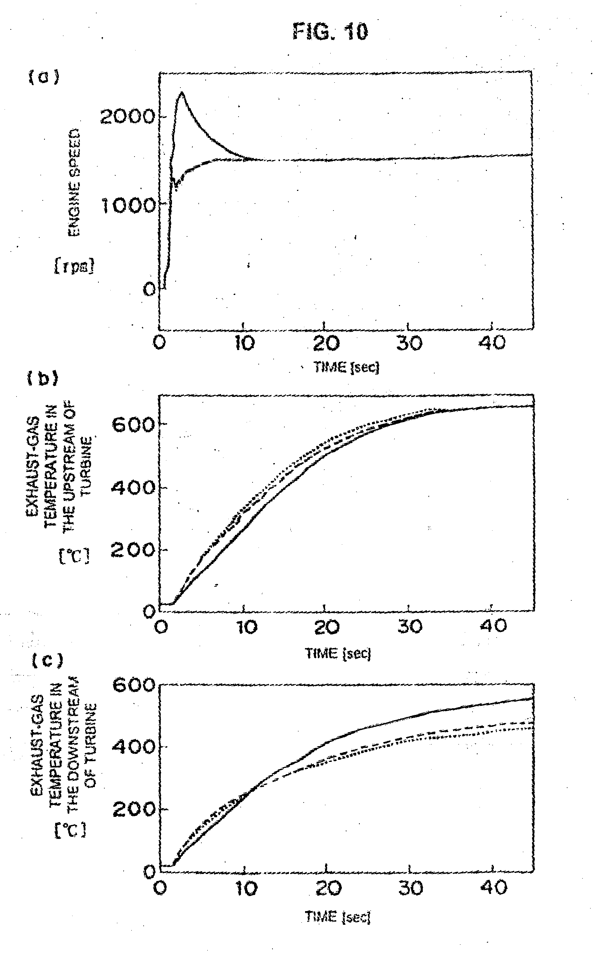

The features and advantages of the fuel injection control and the ignition timing control in cold start described above will be described in detail based on the empirical data. FIG. 10 (a), (b), and (c) show the measurements of the engine rotational speed, the exhaust-gas temperature in the upstream of the turbine, and the exhaust-gas temperature in the downstream of the turbine for two conditions, respectively: One is to keep the condition for the early-stage of catalyst activation, or to retard the ignition to a timing after MBT with the intake-stroke injection and the compression-stroke injection, over the engine-operational period (referred to as "activation by supercharging and ignition retard"), and the other is to keep the condition for the late-stage of catalyst activation, or to cancel the retard of the ignition timing with the leading fuel injection and the trailing fuel injection, over the engine operational period (referred to as "activation by supercharging and expansion-stroke injection").

For reference, FIG. 10 (a), (b), and (c) also depict the engine rotational speed, the exhaust-gas temperature in the upstream of the turbine, and the exhaust-gas temperature in the downstream of the turbine in a non-supercharged engine without a turbo-charger, for the ignition retard to a timing after MBT with the intake-stroke injection and the compression stroke injection (referred to as "activation by non-supercharging and ignition retard"). In FIG. 10 (a), (b), and (c), broken lines indicate the measurements for the activation by supercharging and ignition retard, solid lines indicate the measurements for the activation by supercharging and expansion-stroke injection, and dotted lines indicate the measurements for activation by non-supercharging and ignition retard, respectively.

As will be apparent from FIG. 10 (c), within a specified timing of 11 to 12 seconds after the engine starts in a cold state, the activation by supercharging and ignition retard causes higher temperature of the exhaust-gas in the downstream of the turbine than the activation by supercharging and expansion-stroke injection. In contrast, after the specified timing, the activation by supercharging and expansion-stroke injection causes higher temperature of the exhaust-gas in the downstream of the turbine than the activation by supercharging and ignition retard.Accordingly, in the engine 1 according to this embodiment, the specified timing is set to the injection-mode shift timing, before which (or in the early-stage of catalyst activation) the activation is caused by supercharging and ignition retard, and after which (or in the late-stage of catalyst activation) the activation is caused by supercharging and expansion-stroke injection, for effectively promoting the temperature rise or activation of the exhaust-gas purification catalyst.

### List of Reference Numerals

1 Engine
2 Intake valve
3 Intake-air passage
4 Combustion chamber
5 Fuel injector
6 Piston
7 Spark plug
8 Exhaust valve
9 Exhaust-gas passage
10 Fuel supply passasge
11 High-pressure fuel pump
12 Electric-controlled throttle valve
12a Electric actuator
13 Gas-flow control valve
14 Linear O₂ sensor
15 Turbo-charging device
15a Turbine
16 First catalyst converter
17 Second catalyst converter
18 EGR passage
19 EGR regulating valve
20 Control unit
21 Surge tank
22 Variable valve-timing mechanism

## Claims

1. A direct-injection spark-ignition engine (1), comprising a fuel injector (5) for directly injecting fuel into a combustion chamber (4), an ignition device (7) for igniting the injected fuel, an exhaust-gas purification catalyst (16, 17), a fuel injection controller (20a) for controlling the amount and the timing of the fuel injection by the fuel injector (5), an ignition controller (20b) for controlling the ignition timing by the ignition device (7), and an intake-air controller (12, 15, 22) for controlling the amount of intake-air introduced in the combustion chamber (4),
wherein the fuel injection controller (20a) causes the fuel injector (5) to perform divided injection of a leading fuel injection in a leading period prior to the ignition timing including the intake stroke, and a trailing fuel injection in a trailing period of the expansion stroke after the ignition timing, during a predetermined operating condition where the exhaust-gas purification catalyst (16, 17) is to be activated, **characterized in that**
the engine further comprises a turbo charging device (15) including a turbine (15a),
said exhaust gas purification catalyst (16, 17) is disposed at the downstream of said turbine (15a) of the turbo charging device (15) in an exhaust-gas passage (9), and
the fuel injection controller (20a) controls the fuel injector (5) and the intake-air controller (12, 15, 22) controls the amount of intake-air so that the excess air ratio λ in the combustion chamber (4) is larger than 1 when the combustion of the fuel by the trailing fuel injection and the leading fuel injection completes, so that an afterburn is generated as a consequence of the exhaust gas being agitated, while passing through the turbine (15a), thereby causing a temperature rise of the exhaust gas being discharged to the exhaust-gas purification catalyst (16, 17) disposed at the downstream side of said turbine (15a).

2. A direct-injection spark-ignition engine (1) as defined in claim 1, wherein,
at low engine rotational speed and low engine load, the fuel injection controller (20a) controls the fuel injector (5) and the intake-air controller (12, 15, 22) controls the amount of intake-air so that the excess air ratio λ in the combustion chamber (4) is within the range from 2 to 3 when the fuel by the leading fuel injection combusts.

3. A direct-injection spark-ignition engine (1) as defined in one of the preceding claims, further comprising a required engine-output monitoring device (20c) for monitoring the required engine output,
wherein the intake-air controller (12, 15, 22) is disposed in an intake-air passage (3) leading to an inlet of the combustion chamber (4), and
wherein the fuel injection controller (20a) determines the amount of fuel by the leading fuel injection based on the required engine-output.

4. A direct-injection spark-ignition engine (1) as defined in one of the preceding claims, wherein the fuel injection controller (20a) controls the fuel injector (5) and the intake-air controller (12, 15, 22) controls the amount of intake-air so that the excess air ratio λ in the combustion chamber (4) is smaller than 2 when the combustion of the fuel by the trailing fuel injection and the leading fuel injection completes.

5. A direct-injection spark-ignition engine (1) as defined in one of the preceding claims, wherein the fuel injection controller (20a) sets the amount of the fuel by the leading fuel injection to be equal to or more than that by the trailing fuel injection.

6. A direct-injection spark-ignition engine (1) as defined in one of the preceding claims, wherein the fuel injection controller (20a) sets the starting timing of the trailing fuel injection to be within the range from ATDC 30 to 90 °CA.

7. A direct-injection spark-ignition engine (1) as defined in one of the preceding claims, wherein the ignition controller (20b) sets an ignition timing by the ignition device (7) to be a timing prior to the top-dead-center in the compression stroke.

8. A direct-injection spark-ignition engine (1) as defined in one of the preceding claims, wherein:
the predetermined operating condition is where the exhaust-gas purification catalyst (16, 17) is in an inactivated state,
in the early stage of the inactivated state, the ignition controller (20b) causes the ignition device (7) to ignite at a timing after MBT by a predetermined period and the fuel injection controller (20a) causes the fuel injector (5) to inject fuel prior to the ignition timing,
in the late stage of the inactivated state, the fuel injection controller (20a) causes the fuel injector (5) to perform divided injection of a leading fuel injection in a leading period prior to the ignition timing including the intake stroke, and a trailing fuel injection in a trailing period of the expansion stroke after the ignition timing, and
the fuel injection controller (20a) controls the fuel injector (5) and the intake-air controller (12, 15, 22) controls the amount of intake-air so that an exhaust-gas air-fuel ratio after the combustion of the fuel by the trailing fuel injection is lean of the stoichiometric air-fuel ratio.

9. A direct-injection spark-ignition engine (1) as defined in one of the preceding claims, further comprising an engine temperature determining device (20d) for determining the engine temperature, wherein the early stage of the inactivated state and the late stage of the inactivated state are defined based on the engine temperature.

10. A direct-injection spark-ignition engine (1) as defined in one of the preceding claims, wherein in the early stage of the inactivated state, the fuel injection controller (20a) causes the fuel injector (5) to inject fuel in the latter half of the compression stroke and in a period prior to the period, and wherein in the late stage of the inactivated state, the fuel injection controller (20a) causes the fuel injector (5) to perform the trailing fuel injection in the earlier half of the expansion stroke.

11. A direct-injection spark-ignition engine (1) as defined in one of the preceding claims, wherein in the early stage of the inactivated state, the fuel injection controller (20a) controls the fuel injector (5) and the intake-air controller (12, 15, 22) controls the amount of intake-air so that the exhaust-gas air-fuel ratio is rich of the stoichiometric air-fuel ratio.

12. A direct-injection spark-ignition engine (1) as defined in one of the preceding claims, wherein in the early stage of the inactivated state, the ignition controller (20b) sets the ignition timing by the ignition device (7) to the timing after the top-dead-center of the compression stroke.

13. A direct-injection spark-ignition engine (1) as defined in one of the preceding claims, wherein in the late stage of the inactivated state, the ignition controller (20b) causes the ignition device (7) to ignite at the timing prior to the top-dead-center of the compression stroke, and the fuel injection controller (20a) controls the amount of the leading fuel injection and the amount of the trailing fuel injection so that the ratio of the amount of the trailing fuel injection to the amount of the leading fuel injection increases gradually.

14. A direct-injection spark-ignition engine (1) as defined in one of the preceding claims, wherein in the late stage of the inactivated state, the fuel injection controller (20a) controls the amount of the leading fuel injection and the amount of the trailing fuel injection so that the ratio of the amount of the trailing fuel injection to the amount of the leading fuel injection increases gradually.

15. An engine control method for a direct-injection spark-ignition engine (1) with turbo charging device (15) and exhaust-gas purification catalyst (11, 17) disposed at the downstream of the turbine (15a) of the turbo charging device (15), comprising the following steps:
performing divided injection of a leading fuel injection in a leading period prior to the ignition timing including the intake stroke, and a trailing fuel injection in a trailing period of the expansion stroke after the ignition timing, during a predetermined operating condition where the exhaust-gas purification catalyst (16, 17) is to be activated, **characterized by**
agitating the exhaust gas upstream of the exhaust gas purification catalyst (16, 17), as it passes through the turbine (15a) of the turbo charging device (15), and
controlling an amount of intake-air so that the excess air ratio λ in a combustion chamber (4) is larger than 1 when the combustion of the fuel by the trailing fuel injection and the leading fuel injection completes so as to generate an afterburn.

16. Computer-readable storage medium having stored thereon a computer program, which, when loaded onto a computer, carries out an engine control method for a direct-injection spark-ignition engine (1) according to claim 15.

17. Computer program, which, when loaded onto a computer, carries out an engine control method for a direct-injection spark-ignition engine (1) according to claim 15.

## Patentansprüche

1. Direkteinspritzungs-Funkenzündungs-Motor (1), umfassend eine Kraftstoffeinspritzeinrichtung (5) zum direkten Einspritzen von Kraftstoff in eine Verbrennungskammer (4), eine Zündvorrichtung (7) zum Zünden des eingespritzten Kraftstoffs, einen Abgasreinigungskatalysator (16, 17), eine Kraftstoffeinspritz-Regel- bzw. -Steuereinrichtung (20a) zum Regeln bzw. Steuern der Menge und des Zeitpunkts der Kraftstoffeinspritzung durch die Kraftstoffeinspritzeinrichtung (5), eine Zündungs-Regel- bzw. -Steuereinrichtung (20b) zum Regeln bzw. Steuern des Zündzeitpunkts durch die Zündvorrichtung (7), und eine Einlaßluft-Regel- bzw. - Steuereinrichtung (12, 15, 22) zum Regeln bzw. Steuern der Menge an Einlaßluft, welche in die Verbrennungskammer (4) eingebracht ist bzw. wird,
wobei die Kraftstoffeinspritz-Regel- bzw. -Steuereinrichtung (20a) die Kraftstoffeinspritzeinrichtung (5) veranlaßt, eine unterteilte Einspritzung einer vorangehenden bzw. voreilenden Kraftstoffeinspritzung in einer vorangehenden Periode vor dem Zündzeitpunkt, beinhaltend den Einlaßhub, und eine nachfolgende bzw. nacheilende Kraftstoffeinspritzung in einer nachfolgenden Periode des Expansionshubs nach dem Zündzeitpunkt während eines vorbestimmten Betriebszustands durchzuführen, wo der Abgasreinigungskatalysator (16, 17) zu aktivieren ist, **dadurch**
**gekennzeichnet, daß**
der Motor weiters eine Turboaufladevorrichtung (15) umfaßt, welche eine Turbine (15a) beinhaltet,
der Abgasreinigungskatalysator (16, 17) an der stromabwärtigen Seite der Turbine (15a) der Turboaufladevorrichtung (15) in einem Abgasdurchtritt (9) angeordnet ist, und
die Kraftstoffeinspritz-Regel- bzw. -Steuereinrichtung (20a) die Kraftstoffeinspritzeinrichtung (5) regelt bzw. steuert und die Einlaßluft-Regel- bzw. - Steuereinrichtung (12, 15, 22) die Menge an Einlaßluft regelt bzw. steuert, so daß das Überschußluftverhältnis λ in der Verbrennungskammer (4) größer als 1 ist, wenn die Verbrennung des Kraftstoffs durch die nachfolgende Kraftstoffeinspritzung und die vorangehende Kraftstoffeinspritzung abgeschlossen ist, so daß ein Nachverbrennen als eine Konsequenz des bewegten bzw. beaufschlagten bzw. vermischten bzw. in heftige Bewegung versetzten bzw. verwirbelten Abgases erzeugt ist bzw. wird, während es durch die Turbine (15a) hindurchtritt, wodurch ein Temperaturanstieg des Abgases während eines Ausbringens zu dem Abgasreinigungskatalysator (16, 17) bewirkt wird, welcher an der stromabwärtigen Seite der Turbine (15a) angeordnet ist.

2. Direkteinspritzungs-Funkenzündungs-Motor (1) nach Anspruch 1, wobei
bei niedriger Motordrehzahl und niedriger Motorlast die Kraftstoffeinspritz-Regel- bzw. -Steuereinrichtung (20a) die Kraftstoffeinspritzeinrichtung (5) regelt bzw. steuert und die Einlaßluft-Regel- bzw. -Steuereinrichtung (12, 15, 22) die Menge an Einlaßluft derart regelt bzw. steuert, daß das Überschußluftverhältnis λ in der Verbrennungskammer (4) innerhalb des Bereichs von 2 bis 3 liegt, wenn der Kraftstoff durch die vorangehende Kraftstoffeinspritzung verbrennt.

3. Direkteinspritzungs-Funkenzündungs-Motor (1) nach einem der vorangehenden Ansprüche, weiters umfassend eine Überwachungsvorrichtung (20c) der erforderlichen Motorleistung zum Überwachen der erforderlichen Motorleistung bzw. - ausgabe,
wobei die Einlaßluft-Regel- bzw. -Steuereinrichtung (12, 15, 22) in einem Einlaßluftdurchtritt (3) angeordnet ist, welcher zu einem Einlaß der Verbrennungskammer (4) führt, und
wobei die Kraftstoffeinspritz-Regel- bzw. -Steuereinrichtung (20a) die Menge an Kraftstoff durch die vorangehende Kraftstoffeinspritzung basierend auf der erforderlichen Motorleistung bestimmt.

4. Direkteinspritzungs-Funkenzündungs-Motor (1) nach einem der vorangehenden Ansprüche, wobei die Kraftstoffeinspritz-Regel- bzw. -Steuereinrichtung (20a) die Kraftstoffeinspritzeinrichtung (5) regelt bzw. steuert und die Einlaßluft-Regel- bzw. - Steuereinrichtung (12, 15, 22) die Menge an Einlaßluft so regelt bzw. steuert, daß das Überschußluftverhältnis λ in der Verbrennungskammer (4) kleiner als 2 ist, wenn die Verbrennung des Kraftstoffs durch die nachfolgende Kraftstoffeinspritzung und die vorangehende Kraftstoffeinspritzung abgeschlossen ist.

5. Direkteinspritzungs-Funkenzündungs-Motor (1) nach einem der vorangehenden Ansprüche, wobei die Kraftstoffeinspritz-Regel- bzw. -Steuereinrichtung (20a) die Menge des Kraftstoffs durch die vorangehende Kraftstoffeinspritzung einstellt bzw. festlegt, daß sie gleich derjenigen oder mehr als diejenige durch die nachfolgende Kraftstoffeinspritzung ist.

6. Direkteinspritzungs-Funkenzündungs-Motor (1) nach einem der vorangehenden Ansprüche, wobei die Kraftstoffeinspritz-Regel- bzw. -Steuereinrichtung (20a) den Startzeitpunkt der nachfolgenden Kraftstoffeinspritzung festlegt, um innerhalb des Bereichs von ATDC 30 bis 90 °CA zu legen.

7. Direkteinspritzungs-Funkenzündungs-Motor (1) nach einem der vorangehenden Ansprüche, wobei die Zündungs-Regel- bzw. Steuereinrichtung (20b) einen Zündzeitpunkt durch die Zündvorrichtung (7) einstellt, um ein Zeitpunkt vor einem oberen Totpunkt in dem Kompressionshub zu sein.

8. Direkteinspritzungs-Funkenzündungs-Motor (1) nach einem der vorangehenden Ansprüche, wobei:
der vorbestimmte Betriebszustand ist, wo sich der Abgasreinigungskatalysator (16, 17) in einem inaktivierten Zustand befindet,
in dem frühen Zustand des inaktivierten Zustands die Zündungs-Regel- bzw. - Steuereinrichtung (20b) die Zündvorrichtung (7) veranlaßt, zu einem Zeitpunkt nach MBT um eine bestimmte Periode zu zünden, und die Kraftstoffeinspritzungs-Regel- bzw. -Steuereinrichtung (20a) die Kraftstoffeinspritzeinrichtung (5) veranlaßt, Kraftstoff vor dem Zündzeitpunkt zu zünden,
in der späten Stufe des inaktivierten Zustands die Kraftstoffeinspritz-Regel- bzw.-Steuereinrichtung (20a) die Kraftstoffeinspritzeinrichtung (5) veranlaßt, eine unterteilte Einspritzung einer vorangehenden Kraftstoffeinspritzung in einer vorangehenden Periode vor dem Zündzeitpunkt beinhaltend den Einlaßhub und eine nachfolgende Kraftstoffeinspritzung in einer nachfolgenden Periode des Expansionshubs nach dem Zündzeitpunkt durchzuführen, und
die Kraftstoffeinspritz-Regel- bzw. -Steuereinrichtung (20a) die Kraftstoffeinspritzeinrichtung (5) regelt bzw. steuert und die Einlaßluft-Regel- bzw. - Steuereinrichtung (12, 15, 22) die Menge an Einlaßluft derart regelt bzw. steuert, so daß ein Abgas-Luft-Kraftstoff-Verhältnis nach der Verbrennung des Kraftstoffs durch die nachfolgende Kraftstoffeinspritzung magerer als das stöchiometrische Luft-Kraftstoff-Verhältnis ist.

9. Direkteinspritzungs-Funkenzündungs-Motor (1) nach einem der vorangehenden Ansprüche, weiters umfassend eine Motortemperatur-Bestimmungsvorrichtung (20d) zum Bestimmen der Motortemperatur, wobei die frühe Stufe des inaktivierten Zustands und die späte Stufe des inaktivierten Zustands basierend auf der Motortemperatur definiert sind bzw. werden.

10. Direkteinspritzungs-Funkenzündungs-Motor (1) nach einem der vorangehenden Ansprüche, wobei in der frühen Stufe des inaktivierten Zustands die Kraftstoffeinspritz-Regel- bzw. -Steuereinrichtung (20a) die Kraftstoffeinspritzeinrichtung (5) veranlaßt, Kraftstoff in der letzteren Hälfte des Kompressionshubs und in einer Periode vor der Periode einzuspritzen, und wobei in der späten Stufe des inaktivierten Zustands die Kraftstoffeinspritz-Regel- bzw. -Steuereinrichtung (20a) die Kraftstoffeinspritzeinrichtung (5) veranlaßt, die nachfolgende Kraftstoffeinspritzung in der früheren Hälfte des Expansionshubs durchzuführen.

11. Direkteinspritzungs-Funkenzündungs-Motor (1) nach einem der vorangehenden Ansprüche, wobei in der frühen Stufe des inaktivierten Zustands die Kraftstoffeinspritz-Regel- bzw. -Steuereinrichtung (20a) die Kraftstoffeinspritzeinrichtung (5) regelt bzw. steuert und die Einlaßluft-Regel- bzw. -Steuereinrichtung (12, 15, 22) die Menge an Einlaßluft derart regelt bzw. steuert, daß das Abgas-Luft-Kraftstoff-Verhältnis reicher bzw. fetter als das stöchiometrische Luft-Kraftstoff-Verhältnis ist.

12. Direkteinspritzungs-Funkenzündungs-Motor (1) nach einem der vorangehenden Ansprüche, wobei in der frühen Stufe des inaktivierten Zustands die Zündungs-Regel- bzw. -Steuereinrichtung (20b) den Zündzeitpunkt durch die Zündvorrichtung (7) auf den Zeitpunkt nach dem oberen Totpunkt des Kompressionshubs einstellt.

13. Direkteinspritzungs-Funkenzündungs-Motor (1) nach einem der vorangehenden Ansprüche, wobei in der späten Stufe des inaktivierten Zustands die Zündungs-Regel- bzw. -Steuereinrichtung (20b) die Zündvorrichtung (7) veranlaßt, zu einem Zeitpunkt vor dem oberen Totpunkt des Kompressionshubs zu zünden, und die Kraftstoffeinspritz-Regel- bzw. -Steuereinrichtung (20a) die Menge der vorangehenden Kraftstoffeinspritzung und die Menge der nachfolgenden Kraftstoffeinspritzung derart regelt bzw. steuert, daß das Verhältnis der Menge der nachfolgenden Kraftstoffeinspritzung zu der Menge der vorangehenden Kraftstoffeinspritzung zunehmend bzw. stufenweise zunimmt.

14. Direkteinspritzungs-Funkenzündungs-Motor (1) nach einem der vorangehenden Ansprüche, wobei in der späten Stufe des inaktivierten Zustands die Kraftstoffeinspritz-Regel- bzw. -Steuereinrichtung (20a) die Menge der vorangehenden Kraftstoffeinspritzung und die Menge der nacheilenden Kraftstoffeinspritzung derart regelt bzw. steuert, daß das Verhältnis der Menge der nachfolgenden Kraftstoffeinspritzung zu der Menge der vorangehenden Kraftstoffeinspritzung zunehmend bzw. stufenweise zunimmt.

15. Motor-Regel- bzw. -Steuerverfahren für einen Direkteinspritzungs-Funkenzündungs-Motor (1) mit einer Turboaufladevorrichtung (15) und einem Abgasreinigungskatalysator (16, 17), welcher an der stromabwärtigen Seite der Turbine (15a) der Turboaufladevorrichtung (15) angeordnet ist, umfassend die folgenden Schritte:
Durchführen einer unterteilten Einspritzung einer vorangehenden bzw. voreilenden Kraftstoffeinspritzung in einer vorangehenden Periode vor dem Zündzeitpunkt, beinhaltend den Einlaßhub, und einer nachfolgenden bzw. nacheilenden Kraftstoffeinspritzung in einer nachfolgenden Periode des Expansionshubs nach dem Zündzeitpunkt während eines vorbestimmten Betriebszustands, wo der Abgasreinigungskatalysator (16, 17) zu aktivieren ist, **gekennzeichnet durch**
ein Bewegen bzw. Beeinflussen bzw. Vermischen bzw. in heftige Bewegung Versetzen bzw. Verwirbeln des Abgases stromaufwärts des Abgasreinigungskatalysators (16, 17), wenn es **durch** die Turbine (15a) der Turboaufladevorrichtung (15) hindurchtritt, und
ein Regeln bzw. Steuern einer Menge an Einlaßluft, so daß das Überschußluftverhältnis λ in einer Verbrennungskammer (4) größer als 1 ist bzw. wird, wenn die Verbrennung des Kraftstoffs **durch** die nachfolgende Kraftstoffeinspritzung und die vorangehende Kraftstoffeinspritzung vollendet ist, um ein Nachbrennen bzw. Nachverbrennen zu erzeugen bzw. zu generieren.

16. Computerlesbares Speichermedium, welches darauf ein Computerprogramm gespeichert aufweist, welches, wenn auf einen Computer geladen, ein Motor-Regel- bzw. -Steuerverfahren für einen Direkteinspritzungs-Funkenzündungs-Motor (1) gemäß Anspruch 15 durchführt.

17. Computerprogramm, welches, wenn auf einen Computer geladen, ein Motorregel- bzw. -Steuerverfahren für einen Direkteinspritzungs-Funkenzündungs-Motor (1) nach Anspruch 15 durchführt.

## Revendications

1. Moteur à allumage par étincelles et injection directe (1), comprenant un injecteur de carburant (5) pour injecter directement du carburant dans une chambre de combustion (4), un dispositif d'allumage (7) pour enflammer le carburant injecté, un catalyseur d'épuration des gaz d'échappement (16, 17), un contrôleur d'injection de carburant (20a) pour commander la quantité et le calage de l'injection de carburant par l'injecteur de carburant (5), un contrôleur d'allumage (20b) pour commander le calage de l'allumage par le dispositif d'allumage (7), et un contrôleur d'admission d'air (12, 15, 22) pour commander la quantité d'admission d'air introduite dans la chambre de combustion (4),
dans lequel le contrôleur d'injection de carburant (20a) fait en sorte que l'injecteur de carburant (5) effectue une injection divisée d'une injection avant de carburant dans une période avant, avant le calage de l'allumage comprenant la course d'admission, et une injection arrière de carburant dans une période arrière de la course de détente, après le calage de l'allumage, au cours d'une condition de fonctionnement prédéterminée où le catalyseur d'épuration des gaz d'échappement (16, 17) doit être activé,
**caractérisé en ce que** :
- le moteur comprend de plus un dispositif de suralimentation (15) comprenant une turbine (15 a),
- ledit catalyseur d'épuration des gaz d'échappement (16, 17) est disposé en aval de ladite turbine (15a) du dispositif de suralimentation (15) dans une tubulure de gaz d'échappement (9), et
- le contrôleur d'injection de carburant (20a) commande l'injecteur de carburant (5) et le contrôleur d'admission d'air (12, 15, 22) commande la quantité d'admission d'air de telle sorte que le rapport λ d'air en excès dans la chambre de combustion (4) soit supérieur à 1 lorsque la combustion du carburant par l'injection arrière de carburant et l'injection avant de carburant s'achève, de telle sorte qu'une postcombustion soit produite suite aux tourbillons des gaz d'échappement, tout en passant à travers la turbine (15a), en provoquant de ce fait une élévation de la température des gaz d'échappement évacués vers le catalyseur d'épuration des gaz d'échappement (16, 17) disposé du côté aval de ladite turbine (15a).

2. Moteur à allumage par étincelles et injection directe (1) selon la revendication 1, dans lequel, à une faible vitesse de rotation du moteur et à une faible charge du moteur, le contrôleur d'injection de carburant (20a) commande l'injecteur de carburant (5) et le contrôleur d'admission d'air (12, 15, 22) commande la quantité d'admission d'air de telle sorte que le rapport λ, d'air en excès dans la chambre de combustion (4) se situe dans une plage comprise entre 2 et 3 lorsque le carburant est brûlé par l'injection arrière de carburant.

3. Moteur à allumage par étincelles et injection directe (1) selon l'une quelconque des revendications précédentes, comprenant de plus un dispositif de surveillance du rendement du moteur requis (20c) pour surveiller le rendement du moteur requis, dans lequel le contrôleur d'admission d'air (12, 15, 22) est disposé dans une tubulure d'admission d'air (3) qui mène à une entrée de la chambre de combustion (4), et dans lequel le contrôleur d'injection de carburant (20a) détermine la quantité de carburant requise par l'injection avant de carburant sur la base du rendement du moteur requis.

4. Moteur à allumage par étincelles et injection directe (1) selon l'une quelconque des revendications précédentes, dans lequel le contrôleur d'injection de carburant (20a) commande l'injecteur de carburant (5) et le contrôleur d'admission d'air (12, 15, 22) commande la quantité d'admission d'air de telle sorte que le rapport λ d'air en excès dans la chambre de combustion (4) soit inférieur à 2 lorsque s'achève la combustion du carburant par l'injection arrière de carburant et par l'injection avant de carburant.

5. Moteur à allumage par étincelles et injection directe (1) selon l'une quelconque des revendications précédentes, dans lequel le contrôleur d'injection de carburant (20a) fixe la quantité de carburant requise par l'injection avant de carburant comme étant supérieure ou égale à celle requise par l'injection arrière de carburant.

6. Moteur à allumage par étincelles et injection directe (1) selon l'une quelconque des revendications précédentes, dans lequel le contrôleur d'injection de carburant (20a) fixe le séquencement de démarrage de l'injection arrière de carburant pour qu'il se situe dans une plage d'angle de vilebrequin comprise entre 30 et 90 ° après le point mort haut.

7. Moteur à allumage par étincelles et injection directe (1) selon l'une quelconque des revendications précédentes, dans lequel le contrôleur d'allumage (20b) fixe un calage de l'allumage par le dispositif d'allumage (7) pour que ce soit un calage avant le point mort haut dans la course de compression.

8. Moteur à allumage par étincelles et injection directe (1) selon l'une quelconque des revendications précédentes, dans lequel :
- la condition de fonctionnement prédéterminée est celle où le catalyseur d'épuration des gaz d'échappement (16, 17) se trouve dans un état inactivé,
- dans la phase initiale de l'état inactivé, le contrôleur d'allumage (20b) fait que le dispositif d'allumage (7) provoque l'allumage à un calage après la MBT, d'une période prédéterminée, et que le contrôleur d'injection de carburant (20a) fait que l'injecteur de carburant (5) injecte le carburant avant le calage de l'allumage,
- dans la phase finale de l'état inactivé, le contrôleur d'injection de carburant (20a) fait que l'injecteur de carburant (5) effectue une injection divisée d'une injection avant de carburant dans une période avant, avant le calage d'allumage comprenant la course d'admission, et une injection arrière de carburant dans une période arrière de la course de détente après le calage d'allumage, et
- le contrôleur d'injection de carburant (20a) commande l'injecteur de carburant (5) et le contrôleur d'admission d'air (12, 15, 22) commande la quantité d'admission d'air de telle sorte que le rapport air - carburant gaz d'échappement après la combustion du carburant par l'injection arrière de carburant soit pauvre vis-à-vis du rapport stoechiométrique air - carburant.

9. Moteur à allumage par étincelles et injection directe (1) selon l'une quelconque des revendications précédentes, comprenant de plus un dispositif de détermination de la température du moteur (20d) pour déterminer la température du moteur, dans lequel la phase initiale de l'état inactivé et la phase finale de l'état inactivé sont définies sur la base de la température du moteur.

10. Moteur à allumage par étincelles et injection directe (1) selon l'une quelconque des revendications précédentes, dans lequel dans la phase initiale de l'état inactivé, le contrôleur d'injection de carburant (20a) fait que l'injecteur de carburant (5) injecte le carburant dans la dernière moitié de la course de compression et dans une période avant la période, et dans lequel dans la phase finale de l'état inactivé, le contrôleur d'injection de carburant (20a) fait que l'injecteur de carburant (5) effectue une injection arrière de carburant dans la première moitié de la course de détente.

11. Moteur à allumage par étincelles et injection directe (1) selon l'une quelconque des revendications précédentes, dans lequel, dans la phase initiale de l'état inactivé, le contrôleur d'injection de carburant (20a) commande l'injecteur de carburant (5) et le contrôleur d'admission d'air (12, 15, 22) commande la quantité d'admission d'air de telle sorte que le rapport air - carburant gaz d'échappement soit riche vis-à-vis du rapport stoechiométrique air - carburant.

12. Moteur à allumage par étincelles et injection directe (1) selon l'une quelconque des revendications précédentes, dans lequel, dans la phase initiale de l'état inactivé, le contrôleur d'allumage (20b) fixe le calage de l'allumage par le dispositif d'allumage (7) au calage après le point mort haut de la course de compression.

13. Moteur à allumage par étincelles et injection directe (1) selon l'une quelconque des revendications précédentes, dans lequel, dans la phase finale de l'état inactivé, le contrôleur d'allumage (20b) fait que le dispositif d'allumage (7) provoque l'allumage au calage avant le point mort haut de la course de compression, et le contrôleur d'injection de carburant (20a) commande la quantité d'injection avant de carburant et la quantité d'injection arrière de carburant de telle sorte que le rapport de la quantité d'injection arrière de carburant sur la quantité d'injection avant de carburant, augmente de manière progressive.

14. Moteur à allumage par étincelles et injection directe (1) selon l'une quelconque des revendications précédentes, dans lequel, dans la phase finale de l'état inactivé, le contrôleur d'injection de carburant (20a) commande la quantité d'injection avant de carburant et la quantité d'injection arrière de carburant de telle sorte que le rapport de la quantité d'injection arrière de carburant sur la quantité d'injection avant de carburant, diminue de manière progressive.

15. Procédé de commande de moteur d'un moteur à allumage par étincelles et injection directe (1), avec un dispositif de suralimentation (15) et un catalyseur d'épuration des gaz d'échappement (16, 17) disposé en aval de la turbine (15a) du dispositif de suralimentation (15) comprenant les étapes suivantes :
- exécution d'une injection divisée d'une injection avant de carburant dans une période avant, avant le calage d'allumage comprenant la course d'admission, et une injection arrière de carburant dans une période arrière de la course de détente après le calage d'allumage, au cours d'une condition de fonctionnement prédéterminée où le catalyseur d'épuration des gaz d'échappement (16, 17) doit être activé, **caractérisé par**
- une agitation des gaz d'échappement en amont du catalyseur d'épuration des gaz d'échappement (16, 17), lorsqu'ils passent à travers la turbine (15a) du dispositif de suralimentation (15), et
- la commande d'une quantité d'admission d'air de telle sorte que le rapport λ d'air en excès dans une chambre de combustion (4) soit supérieur à 1 lorsque la combustion du carburant par l'injection arrière de carburant et l'injection avant de carburant s'achève afin de produire une postcombustion.

16. Support de stockage pouvant être lu par un ordinateur dans lequel est stocké un programme d'ordinateur qui, une fois chargé dans un ordinateur, exécute un procédé de commande de moteur d'un moteur à allumage par étincelles et injection directe (1) selon la revendication 15.

17. Programme d'ordinateur qui, une fois chargé dans un ordinateur, exécute un procédé de commande de moteur d'un moteur à allumage par étincelles et injection directe (1) selon la revendication 15.
